# FASCICULE DE BREVET EUROPEEN

(11) **EP 3 416 929 B1**
(45) Date de publication et mention de la délivrance du brevet: **29.01.2020**
(21) Numéro de dépôt: 17709156.8
(22) Date de dépôt: 16.02.2017
(51) Int. Cl.: C04B 35/565, C04B 35/573, C04B 35/628, C04B 35/63, C04B 35/80, F01D 9/04

(54) **PROCEDE DE FABRICATION D'UNE PIECE EN MATERIAU COMPOSITE A MATRICE CERAMIQUE**
VERFAHREN ZUR HERSTELLUNG EINES KÖRPERS AUS VERBUNDWERKSTOFF MIT EINER KERAMISCHEN MATRIX
METHOD FOR MANUFACTURING A PART MADE OF A CERAMIC MATRIX COMPOSITE MATERIAL

(30) Priorité: 18.02.2016 FR 1651327
(43) Date de publication de la demande: 26.12.2018
(73) Titulaire: Safran Ceramics, 33185 Le Haillan (FR); Centre National de la Recherche Scientifique, 75016 Paris (FR)
(72) Inventeur: MENDEZ, Emilie, 33320 Le Taillan (FR); ROGER, Jérôme, 33600 Pessac (FR); LEPETITCORPS, Yann, 33850 Leognan (FR)
(74) Mandataire: Cabinet Beau de Loménie
(86) Numéro de dépôt international: PCT/FR2017/050348
(87) Numéro de publication internationale: WO 2017/140986

(56) Documents cités:
- EP-A1- 1 391 442
- WO-A1-2016/001026
- MARCHAIS A ET AL: "Capillary infiltration of hexadecane in packed SiC powder and in SiC/SiC preforms: Pore description and calculation of molten Si infiltration", CERAMICS INTERNATIONAL, vol. 42, no. 6, 12 février 2016 (2016-02-12), pages 7774-7780, XP029461743, ISSN: 0272-8842, DOI: 10.1016/J.CERAMINT.2016.01.203
- MASANORI SATO ET AL: "Effect of chopped Si-Al-C fiber addition on the mechanical properties of silicon carbide composite", JOURNAL OF MATERIALS SCIENCE, KLUWER ACADEMIC PUBLISHERS, BO, vol. 41, no. 22, 20 septembre 2006 (2006-09-20), pages 7466-7473, XP019450896, ISSN: 1573-4803, DOI: 10.1007/S10853-006-0791-3

## Description

### Arrière-plan de l'invention

L'invention concerne un procédé de fabrication d'une pièce en matériau composite à matrice céramique (« Ceramic Matrix Composite » ; « CMC ») dans lequel la matrice est formée par infiltration d'une composition à base de silicium à l'état fondu (« Melt-Infiltration » ; « MI »).

Un domaine d'application de l'invention est la réalisation de pièces destinées à être exposées en service à des températures élevées, notamment dans des domaines aéronautique et spatial, en particulier des pièces de parties chaudes de turbomachines aéronautiques, étant noté que l'invention peut être appliquée dans d'autres domaines, par exemple dans le domaine des turbines à gaz industrielles.

Les matériaux composites CMC possèdent de bonnes propriétés thermostructurales, c'est-à-dire des propriétés mécaniques élevées qui les rendent aptes à constituer des pièces structurales, et la capacité de conserver ces propriétés à hautes températures. L'utilisation de matériaux CMC à la place de matériaux métalliques pour des pièces exposées en service à des températures élevées a donc été préconisée, d'autant que ces matériaux présentent une masse volumique sensiblement plus faible que les matériaux métalliques auxquels ils se substituent.

Un procédé bien connu pour la fabrication de pièces en CMC consiste à réaliser une préforme à partir de strates fibreuses de fibres de carbure de silicium, à introduire ensuite dans la préforme obtenue une poudre de carbure de silicium puis à infiltrer la préforme ainsi chargée par la poudre par du silicium fondu de manière à former une matrice céramique, comme par exemple dans le document WO 2016/001026 A1. Le procédé MI présente l'avantage d'être bien plus rapide et aisé à mettre en œuvre que la densification par infiltration chimique en phase vapeur (« Chemical Vapor Infiltration » ; « CVI »). Il est toutefois souhaitable d'améliorer davantage encore les performances mécaniques des pièces en CMC ainsi obtenues.

On connait par ailleurs EP 1 391 442 qui enseigne, en lien avec le paragraphe [0011], une solution technique étroitement liée au cas où la matrice est formée par frittage d'une poudre.

Il existe donc un besoin pour améliorer les propriétés mécaniques des pièces en matériau composite à matrice céramique obtenues par infiltration à l'état fondu d'une composition à base de silicium.

### Objet et résumé de l'invention

A cet effet, l'invention propose, selon un premier aspect, un procédé de fabrication d'une pièce en matériau composite à matrice céramique, le procédé comportant au moins l'étape suivante :
- infiltration d'une préforme fibreuse avec une composition fondue comprenant majoritairement en masse du silicium, la préforme fibreuse comprenant des fibres de carbure de silicium (SiC), une poudre de carbure de silicium étant présente dans la porosité de ladite préforme, la taille moyenne des cristallites de carbure de silicium dans la poudre étant inférieure à la taille moyenne des cristallites de carbure de silicium dans les fibres, une matrice céramique étant formée dans la porosité de la préforme fibreuse durant l'infiltration afin d'obtenir la pièce en matériau composite.

Par « composition fondue comprenant majoritairement en masse du silicium », il faut comprendre que la teneur massique en silicium dans la composition fondue est supérieure ou égale à 50%.

La taille moyenne des cristallites de carbure de silicium dans un matériau peut être déterminée à partir du résultat d'un essai de diffractométrie aux rayons X (DRX) par application de la formule de Scherrer. La formule de Scherrer est la suivante : t_{moy} = 0,9λ/[ε.cos(2θ/2)] où t_{moy} est la taille moyenne des cristallites de carbure de silicium dans le matériau, À est la longueur d'onde des rayons X, ε est la largeur à mi-hauteur d'une raie relative au carbure de silicium mesurée en radians et 2θ est la position du sommet de cette raie sur le diffractogramme en degrés (°). Dans les cas particuliers où la loi de Scherrer risque de fournir des résultats approximatifs, par exemple lorsqu'il y a un recouvrement significatif entre deux raies voisines, il est possible d'utiliser la méthode de Rietveld. Cette méthode consiste à simuler un diffractogramme à partir d'un modèle cristallographique de l'échantillon puis à ajuster les paramètres de ce modèle afin que le diffractogramme simulé soit le plus proche possible du diffractogramme expérimental. Ces étapes peuvent être réalisées à l'aide de logiciels spécifiques tels que FullProf, TOPAS, MAUD et FAULTS.

Dans l'invention, on utilise une poudre de SiC présentant, avant l'infiltration, une taille moyenne des cristallites de SiC inférieure à la taille moyenne des cristallites de SiC dans les fibres. La mise en œuvre d'une telle poudre permet avantageusement de réduire, voire d'éviter, l'attaque des fibres SiC de la préforme fibreuse par la composition fondue lors de l'infiltration. L'invention permet ainsi avantageusement de réduire, voire d'éviter, la dégradation des fibres SiC de la préforme fibreuse lors de l'infiltration de la composition fondue et ainsi d'améliorer les propriétés mécaniques des pièces en CMC fabriquées et en particulier d'améliorer la limite élastique de telles pièces.

Les inventeurs ont, en effet, constaté que le degré d'interaction entre la composition de silicium fondu et le carbure de silicium est d'autant plus élevé que le diamètre des cristallites de SiC est faible. Ainsi, en mettant en œuvre une poudre telle que décrite plus haut, les interactions entre la composition fondue et le SiC de la poudre sont favorisées par rapport aux interactions entre la composition fondue et le SiC des fibres. Il s'ensuit donc une altération moindre des fibres SiC durant l'infiltration par la composition fondue et donc des propriétés mécaniques améliorées pour la pièce obtenue.

Dans un exemple de réalisation, la préforme fibreuse peut présenter, avant l'infiltration, une phase de consolidation comprenant du carbure de silicium, la taille moyenne des cristallites de carbure de silicium dans la poudre étant inférieure à la taille moyenne des cristallites de carbure de silicium dans la phase de consolidation.

De manière analogue à ce qui a été détaillé plus haut relativement aux fibres SiC, le fait que la poudre présente une taille moyenne de cristallites de SiC inférieure à la taille moyenne des cristallites de SiC dans la phase de consolidation permet avantageusement de réduire, voire d'éviter, l'attaque de la phase de consolidation lors de l'infiltration par la composition fondue et ainsi d'améliorer les propriétés mécaniques de la pièce obtenue.

Dans un exemple de réalisation, la taille moyenne des cristallites de carbure de silicium dans la poudre peut être inférieure ou égale à 80% de la taille moyenne des cristallites de carbure de silicium dans les fibres. En particulier, la taille moyenne des cristallites de carbure de silicium dans la poudre peut être inférieure ou égale à la moitié de la taille moyenne des cristallites de carbure de silicium dans les fibres.

De tels exemples de réalisation permettent avantageusement de réduire davantage encore les interactions entre les fibres SiC et la composition fondue et ainsi d'améliorer encore les propriétés mécaniques de la pièce obtenue.

De la même manière, lorsqu'une phase de consolidation comprenant du SiC est formée, la taille moyenne des cristallites de SiC dans la poudre peut être inférieure ou égale à 80% de la taille moyenne des cristallites de SiC dans la phase de consolidation. En particulier dans ce cas, la taille moyenne des cristallites de SiC dans la poudre peut être inférieure ou égale à la moitié de la taille moyenne des cristallites de SiC dans la phase de consolidation.

Dans un exemple de réalisation, une interphase peut être formée sur les fibres avant l'étape d'infiltration. En particulier, l'interphase peut être formée par au moins une couche des matériaux suivants : carbone pyrolytique (PyC), carbone dopé au bore (BC) ou nitrure de bore (BN).

Dans un exemple de réalisation, la préforme fibreuse est tout d'abord formée puis la poudre de carbure de silicium est introduite dans la porosité de ladite préforme et l'infiltration décrite plus haut est ensuite réalisée. En variante, une pluralité de textures fibreuses chargées par la poudre de carbure de silicium sont assemblées afin d'obtenir la préforme fibreuse chargée par ladite poudre puis l'infiltration décrite plus haut est réalisée.

La préforme fibreuse peut être formée en une seule pièce par tissage tridimensionnel ou à partir d'une pluralité de strates fibreuses bidimensionnelles.

La pièce formée par le procédé décrit plus haut peut par exemple être une pièce de turbomachine. La pièce peut par exemple être un anneau ou un secteur d'anneau de turbine, une aube ou un distributeur.

### Brève description des dessins

D'autres caractéristiques et avantages de l'invention ressortiront de la description suivante, donnée à titre non limitatif, en référence aux dessins annexés, sur lesquels :
- la figure 1 est un ordinogramme d'un exemple de procédé selon l'invention,
- la figure 2 est une photographie d'une pièce obtenue par mise en œuvre d'un exemple de procédé selon l'invention,
- la figure 3 est une photographie d'une pièce obtenue par mise en œuvre d'un procédé hors invention, et
- la figure 4 compare les résultats obtenus lors d'un essai de traction selon que la pièce évaluée a ou non été obtenue par mise en œuvre d'un procédé selon l'invention.

### Description détaillée de modes de réalisation

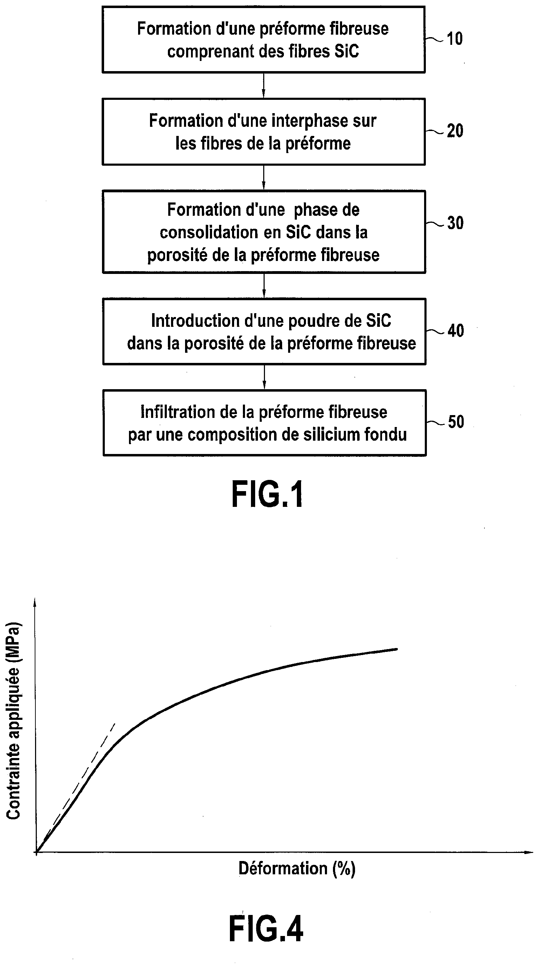

Les différentes étapes d'un exemple de procédé selon l'invention sont représentées à la figure 1.

Dans un premier temps, une préforme fibreuse comprenant des fibres de carbure de silicium est formée (étape 10). Cette préforme fibreuse est destinée à former le renfort fibreux de la pièce à obtenir. Les fibres utilisées peuvent être des fibres de carbure de silicium (SiC) fournies sous la dénomination « Nicalon », « Hi-Nicalon » ou « Hi-Nicalon-S » par la société japonaise Nippon Carbon ou « Tyranno SA3 » par la société UBE.

La préforme fibreuse peut être obtenue par tissage tridimensionnel entre une pluralité de couches de fils de chaîne et une pluralité de couches de fils de trame. Le tissage tridimensionnel réalisé peut être un tissage à armure "interlock", c'est-à-dire une armure de tissage dans laquelle chaque couche de fils de trame lie plusieurs couches de fils de chaîne avec tous les fils d'une même colonne de trame ayant le même mouvement dans le plan de l'armure.

Différents modes de tissage utilisables sont décrits dans le document WO 2006/136755.

La préforme fibreuse peut encore être obtenue par assemblage d'une pluralité de textures fibreuses. Dans ce cas, les textures fibreuses peuvent être liées entre elles, par exemple par couture ou aiguilletage. Les textures fibreuses peuvent notamment être chacune obtenue à partir d'une couche ou d'un empilement de plusieurs couches de :
- tissu unidimensionnel (UD),
- tissu bidimensionnel (2D),
- tresse,
- tricot,
- feutre,
- nappe unidirectionnelle (UD) de fils ou câbles ou nappes multidirectionnelle (nD) obtenue par superposition de plusieurs nappes UD dans des directions différentes et liaison des nappes UD entre elles par exemple par couture, par agent de liaison chimique ou par aiguilletage.

Dans le cas d'un empilement de plusieurs couches, celles-ci sont liées entre elles par exemple par couture, par implantation de fils ou d'éléments rigides ou par aiguilletage.

Une fois la préforme formée, une interphase de défragilisation peut être formée sur les fibres de la préforme (étape 20).

De façon connue, un traitement de surface des fibres préalablement à la formation de l'interphase est de préférence réalisé pour éliminer l'ensimage et une couche superficielle d'oxyde tel que de la silice SiO₂ présents sur les fibres. L'interphase peut être formée par CVI. L'interphase peut être monocouche ou multicouches. L'interphase peut comporter une ou plusieurs couches de carbone pyrolytique (PyC), de nitrure de bore (BN), ou de carbone dopé au bore, noté BC (le carbone dopé au bore présentant une teneur atomique en bore comprise entre 5% et 20%, le reste étant du carbone). L'épaisseur de l'interphase peut être supérieure ou égale à 10 nm et par exemple être comprise entre 10 nm et 1000 nm. Bien entendu, on ne sort pas du cadre de l'invention lorsque l'interphase est formée sur les fibres avant formation de la préforme.

Une phase de consolidation comprenant du carbure de silicium peut ensuite être formée dans la porosité de la préforme fibreuse de manière connue en soi (étape 30). La phase de consolidation peut être formée par infiltration chimique en phase vapeur. La phase de consolidation peut comprendre uniquement du carbure de silicium. En variante, la phase de consolidation peut comporter, en plus du carbure de silicium, un matériau auto-cicatrisant. On peut choisir un matériau autocicatrisant contenant du bore, par exemple un système ternaire Si-B-C ou du carbure de bore B₄C capable de former, en présence d'oxygène, un verre de type borosilicate ayant des propriétés autocicatrisantes. L'épaisseur du dépôt de la phase de consolidation peut être supérieure ou égale à 500 nm, par exemple comprise entre 1 µm et 30 µm. La couche externe de la phase de consolidation (la plus éloignée des fibres) est avantageusement en carbure de silicium afin de constituer une barrière de réaction entre les fibres sous-jacentes et la composition de silicium fondue introduite ultérieurement.

L'épaisseur de la phase de consolidation est suffisante pour consolider la préforme fibreuse, c'est-à-dire pour lier entre elles les fibres de la préforme de façon suffisante pour que la préforme puisse être manipulée en conservant sa forme sans assistance d'outillage de maintien. Après cette consolidation, la préforme reste poreuse, la porosité initiale n'étant par exemple comblée que pour une partie minoritaire par l'interphase et la phase de consolidation.

La poudre de SiC est ensuite introduite dans la porosité de la préforme fibreuse consolidée (étape 40). Pour ce faire, la préforme consolidée est imprégnée par une barbotine contenant la poudre en suspension dans un milieu liquide, par exemple de l'eau. La poudre peut être retenue dans la préforme par filtration ou par décantation éventuellement avec l'aide d'une dépression. On utilise de préférence une poudre formée de particules de SiC de dimension moyenne (D50) inférieure ou égale à 5 µm, voire à 1 µm. La poudre de SiC introduite est telle que la taille moyenne des cristallites de SiC dans la poudre est inférieure à la fois à la taille moyenne des cristallites de SiC dans les fibres et à la taille moyenne des cristallites de SiC dans la phase de consolidation.

Avant l'infiltration par la composition fondue, la poudre de carbure de silicium est présente dans la porosité de la préforme fibreuse. Cette poudre présente avant l'infiltration une taille moyenne des cristallites de SiC vérifiant la condition décrite plus haut. En plus des particules de SiC, des particules d'un autre matériau, comme du carbone par exemple, peuvent être présentes dans la porosité de la préforme fibreuse.

On réalise ensuite l'infiltration de la préforme fibreuse par la composition fondue comprenant majoritairement en masse du silicium fondu (étape 50). Cette composition peut correspondre à du silicium fondu seul ou à un alliage de silicium à l'état fondu lequel contient en outre un ou plusieurs autres éléments tels que du titane, du molybdène, du bore, du fer ou du niobium. La teneur massique en silicium dans la composition fondue peut être supérieure ou égale à 90%. Comme expliqué plus haut, du fait de la faible taille des cristallites de SiC dans la poudre, la composition fondue interagit préférentiellement avec cette poudre lors de l'infiltration et, par conséquent, moins avec le SiC présent dans la phase de consolidation ou dans les fibres, ce qui permet d'améliorer les propriétés mécaniques de la pièce obtenue.

En lien avec l'exemple illustré à la figure 1, on a ainsi décrit un procédé de fabrication d'une pièce en matériau composite à matrice céramique qui comporte au moins les étapes suivantes :
- formation d'une préforme fibreuse comprenant des fibres de carbure de silicium,
- introduction d'une poudre de carbure de silicium dans la porosité de la préforme fibreuse, la taille moyenne des cristallites de carbure de silicium dans la poudre étant inférieure à la taille moyenne des cristallites de carbure de silicium dans les fibres, et
- infiltration de la préforme fibreuse chargée par la poudre de carbure de silicium avec une composition fondue comprenant majoritairement en masse du silicium, une matrice céramique étant formée dans la porosité de la préforme fibreuse durant l'infiltration afin d'obtenir la pièce en matériau composite.

Une interphase et/ou une phase de consolidation peuvent être formées sur les fibres après formation de la préforme et avant introduction de la poudre comme évoqué plus haut.

En variante, le procédé de fabrication de la pièce peut comporter au moins les étapes suivantes :
- formation d'une préforme fibreuse par assemblage d'une pluralité de textures fibreuses comprenant des fibres de carbure de silicium, une poudre de carbure de silicium étant présente dans la porosité desdites textures, la taille moyenne des cristallites de carbure de silicium dans la poudre étant inférieure à la taille moyenne des cristallites de carbure de silicium dans les fibres, et
- infiltration de la préforme fibreuse ainsi obtenue avec une composition fondue comprenant majoritairement en masse du silicium, une matrice céramique étant formée dans la porosité de la préforme fibreuse durant l'infiltration afin d'obtenir la pièce en matériau composite.

### Exemples

### Exemple 1 (invention)

Une préforme fibreuse formée de fibres en carbure de silicium présentant une taille moyenne de cristallites SiC de 30 nm a été utilisée. Les fibres SiC utilisées sont commercialisées sous la dénomination Hi-Nicalon Type S par la société NGS. Une interphase monocouche de pyrocarbone a tout d'abord été formée sur les fibres par infiltration chimique en phase vapeur. La préforme a ensuite été densifiée par une phase de consolidation de SiC formée par infiltration chimique en phase vapeur. La taille moyenne des cristallites SiC dans la phase de consolidation ainsi obtenue était de 30 nm. Une barbotine comprenant une poudre de SiC présentant une taille moyenne de cristallites SiC de 15 nm a ensuite été introduite dans la porosité de la préforme fibreuse consolidée. Après séchage de la préforme ainsi imprégnée, la préforme fibreuse a été infiltrée par une composition d'infiltration comprenant majoritairement du silicium fondu. La composition d'infiltration utilisée présentait une teneur molaire en silicium de 96% et une teneur molaire en bore de 4%. La température durant l'infiltration a été maintenue à 1445°C pendant 45 minutes sous pression partielle d'argon.

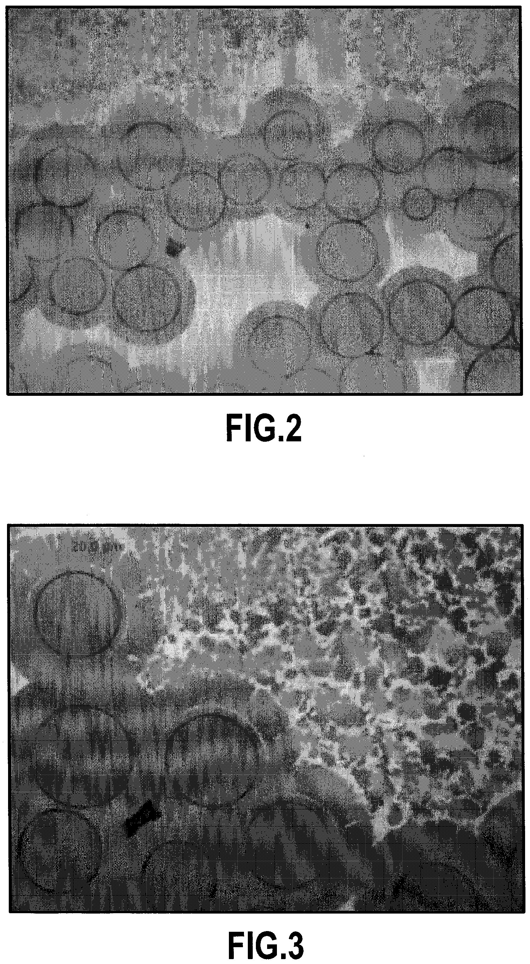

La figure 2 est une photographie du résultat ainsi obtenu. On constate que la phase de consolidation n'a pas été endommagée durant l'infiltration ce qui confère à la pièce des propriétés mécaniques améliorées.

### Exemple 2 (hors invention)

Le même protocole opératoire que dans l'exemple 1 a été mis en œuvre à l'exception que la préforme consolidée a été imprégnée par une barbotine comprenant une poudre de SiC présentant une taille moyenne de cristallites de 120 nm.

La figure 3 est une photographie du résultat ainsi obtenu. On constate que la phase de consolidation a été endommagée durant l'infiltration ce qui produit une pièce présentant de moins bonnes propriétés mécaniques que la pièce produite dans le cadre de l'exemple 1.

La figure 4 illustre les résultats obtenus lors d'un essai de traction mené, jusqu'à la rupture à température ambiante, sur la pièce obtenue par mise en œuvre de l'exemple 1 (en traits pleins) et sur celle obtenue par mise en œuvre de l'exemple 2 (en traits pointillés). Ce résultat d'essai confirme que la pièce obtenue par mise en œuvre d'un procédé selon l'invention présente des propriétés mécaniques supérieures à celle obtenue par mise en œuvre du procédé selon l'exemple 2 hors invention.

L'expression « compris(e) entre ... et ... » doit se comprendre comme incluant les bornes.

## Revendications

1. Procédé de fabrication d'une pièce en matériau composite à matrice céramique, le procédé comportant au moins l'étape suivante :
- infiltration d'une préforme fibreuse avec une composition fondue comprenant majoritairement en masse du silicium, la préforme fibreuse comprenant des fibres de carbure de silicium, une poudre de carbure de silicium étant présente dans la porosité de ladite préforme, la taille moyenne des cristallites de carbure de silicium dans la poudre étant inférieure à la taille moyenne des cristallites de carbure de silicium dans les fibres, une matrice céramique étant formée dans la porosité de la préforme fibreuse durant l'infiltration afin d'obtenir la pièce en matériau composite.

2. Procédé selon la revendication 1, dans lequel la préforme fibreuse présente, avant l'infiltration, une phase de consolidation comprenant du carbure de silicium, la taille moyenne des cristallites de carbure de silicium dans la poudre étant inférieure à la taille moyenne des cristallites de carbure de silicium dans la phase de consolidation.

3. Procédé selon l'une quelconque des revendications 1 et 2, dans lequel la taille moyenne des cristallites de carbure de silicium dans la poudre est inférieure ou égale à 80% de la taille moyenne des cristallites de carbure de silicium dans les fibres.

4. Procédé selon l'une quelconque des revendications 2 et 3, dans lequel la taille moyenne des cristallites de carbure de silicium dans la poudre est inférieure ou égale à 80% de la taille moyenne des cristallites de carbure de silicium dans la phase de consolidation.

5. Procédé selon l'une quelconque des revendications 1 à 4, dans lequel une interphase est formée sur les fibres avant l'étape d'infiltration.

6. Procédé selon la revendication 5, dans lequel l'interphase est formée par au moins une couche des matériaux suivants : carbone pyrolytique, carbone dopé au bore ou nitrure de bore.

7. Procédé selon l'une quelconque des revendications 1 à 6, dans lequel la préforme fibreuse est formée en une seule pièce par tissage tridimensionnel ou à partir d'une pluralité de strates fibreuses bidimensionnelles.

## Patentansprüche

1. Verfahren zur Herstellung eines Körpers aus Verbundwerkstoff mit einer keramischen Matrix, wobei das Verfahren mindestens den folgenden Schritt umfasst:
- Infiltration einer faserigen Vorform mit einer geschmolzenen Zusammensetzung, die nach Gewicht überwiegend Silizium umfasst, wobei die faserige Vorform Siliziumkarbidfasern umfasst, wobei ein Siliziumkarbidpulver in der Porosität der Vorform vorhanden ist, wobei die durchschnittliche Größe der Siliziumkarbidkristallite im Pulver kleiner als die durchschnittliche Größe der Siliziumkarbidkristallite in den Fasern ist, wobei während der Infiltration eine Keramikmatrix in der Porosität der faserigen Vorform gebildet wird, um den Körper aus Verbundwerkstoff zu erhalten.

2. Verfahren nach Anspruch 1, wobei die faserige Vorform vor der Infiltration eine Konsolidierungsphase aufweist, die Siliziumkarbid umfasst, wobei die durchschnittliche Größe der Siliziumkarbidkristallite im Pulver kleiner als die durchschnittliche Größe der Siliziumkarbidkristallite in der Konsolidierungsphase ist.

3. Verfahren nach einem der Ansprüche 1 und 2, wobei die durchschnittliche Größe der Siliziumkarbidkristallite im Pulver kleiner oder gleich 80 % der durchschnittlichen Größe der Siliziumkarbidkristallite in den Fasern ist.

4. Verfahren nach einem der Ansprüche 2 und 3, wobei die durchschnittliche Größe der Siliziumkarbidkristallite im Pulver kleiner oder gleich 80 % der durchschnittlichen Größe der Siliziumkarbidkristallite in der Konsolidierungsphase ist.

5. Verfahren nach einem der Ansprüche 1 bis 4, wobei vor dem Infiltrationsschritt eine Zwischenphase auf den Fasern gebildet wird.

6. Verfahren nach Anspruch 5, wobei die Zwischenphase durch mindestens eine Schicht aus den folgenden Materialien gebildet wird: pyrolytischer Kohlenstoff, bordotierter Kohlenstoff oder Bornitrid.

7. Verfahren nach einem der Ansprüche 1 bis 6, wobei die faserige Vorform einstückig durch dreidimensionales Weben oder aus einer Vielzahl von zweidimensionalen faserigen Schichten gebildet wird.

## Claims

1. A method of fabricating a part out of ceramic matrix composite material, the method comprising at least the following step:
• infiltrating a fiber preform with a molten composition comprising a majority by weight of silicon, the fiber preform comprising silicon carbide fibers, silicon carbide powder being present in the pores of said preform, the mean size of the silicon carbide crystallites in the powder being less than the mean size of the silicon carbide crystallites in the fibers, a ceramic matrix being formed in the pores of the fiber preform during the infiltration so as to obtain the part made of composite material.

2. A method according to claim 1, wherein prior to infiltration, the fiber preform presents a consolidation phase comprising silicon carbide, the mean size of the silicon carbide crystallites in the powder being less than the mean size of the silicon carbide crystallites in the consolidation phase.

3. A method according to claim 1 or claim 2, wherein the mean size of the silicon carbide crystallites in the powder is less than or equal to 80% of the mean size of the silicon carbide crystallites in the fibers.

4. A method according to claim 2 or claim 3, wherein the mean size of the silicon carbide crystallites in the powder is less than or equal to 80% of the mean size of the silicon carbide crystallites in the consolidation phase.

5. A method according to any one of claims 1 to 4, wherein an interphase is formed on the fibers before the infiltration step.

6. A method according to claim 5, wherein the interphase is formed by at least one layer of the following materials: pyrolytic carbon, boron-doped carbon, or boron nitride.

7. A method according to any one of claims 1 to 6, wherein the fiber preform is made as a single piece by three-dimensional weaving or from a plurality of two-dimensional fiber plies.
